# EUROPEAN PATENT SPECIFICATION

(11) **EP 3 926 738 B1**
(45) Date of publication and mention of the grant of the patent: **22.04.2026**
(21) Application number: 21164293.9
(22) Date of filing: 23.03.2021
(51) Int. Cl.: H01M 50/10, H01M 50/14, H01M 50/40, H01M 50/449

(54) **BATTERY**
BATTERIE
BATTERIE

(30) Priority: 15.06.2020 CN 202021100961 U
(43) Date of publication of application: 22.12.2021
(73) Proprietor: Ningde Amperex Technology Limited, Ningde, Fujian 352100 (CN)
(72) Inventor: ZHOU, Quan, Ningde City,, Fujian Province, 352100 (CN); ZHANG, Guowen, Ningde City,, Fujian Province, 352100 (CN)
(74) Representative: Kraus & Lederer PartGmbB

(56) References cited:
- CN-A- 110 190 340
- US-A1- 2013 078 503
- US-A1- 2018 261 805

## Description

### TECHNICAL FIELD

This application relates to a battery.

### BACKGROUND

A battery usually includes a housing and a battery cell accommodated in the housing. The battery cell is formed by stacking or winding a positive electrode plate, a separator, and a negative electrode plate. To conduct electrons, a positive tab is connected onto a current collector of the positive electrode plate, and a negative tab is connected onto a current collector of the negative electrode plate.

However, when the battery drops or vibrates (for example, vibrates during transportation), the battery cell shakes in the housing, thereby fracturing the tabs due to wear and tear after being pulled, and even causing the battery cell to fail. In addition, the tabs may also cause the electrode plates to be displaced during the pulling, and bring risks of short circuits.
US 2013/0078503 A1 teaches a rechargeable battery, which includes an electrode assembly including electrodes on both sides of a separator, a case including the electrode assembly and electrically connected to an electrode on one side of the electrode assembly, and a cap assembly coupled with the case and electrically connected to another electrode of the electrode assembly, wherein an external side of the electrode assembly and an internal side of the case are attached to face each other, and at least one of the external side of the electrode assembly and the internal side of the case is in the form of a screw unit.
CN 110190340 A1 relates to a secondary battery. The secondary battery comprises an electrode assembly, a shell, a top cover assembly and a first insulating tape. The electrode assembly comprises one or more electrode units. Each electrode unit is provided with a positive electrode pole piece, a negative electrode pole piece and a diaphragm arranged between the positive electrode pole piece and the negative electrode pole piece. Each of the electrode units is of a winding type structure and is flat, and the negative electrode pole piece on the outermost circle of the electrode units is located on the outer side of the positive electrode pole piece on the outermost circle. The shell is provided with a first side wall and a containing cavity, the electrode assembly is contained in the containing cavity, the shell is electrically connected with the positive electrode pole piece, and the top cover assembly is connected to the shell in a sealed mode. The first insulating tape is located between the electrode assembly and the first side wall and tightly attached to the outer surface of the electrode assembly.

### SUMMARY

In view of the disadvantages of the conventional art, it is necessary to provide a battery capable of avoiding failure or short circuits of a battery cell. Accordingly, the present invention is defined in the appended claims.

This application provides a battery, including a housing and a battery cell accommodated in the housing, with a gap existing between the housing and the battery cell. The battery further includes a composite plate. The composite plate is located in the gap. The composite plate includes a first elastic layer and an insulation layer located on a surface of the first elastic layer. The composite plate is provided with a via hole, and the via hole runs through the first elastic layer and the insulation layer

In some embodiments of this application, the insulation layer is located between the first elastic layer and the battery cell.

In some embodiments of this application, the first elastic layer includes an insulation material, and the first elastic layer is located between the insulation layer and the battery cell.

In some embodiments of this application, the material of the first elastic layer includes at least one of expandable polyethylene, polyurethane, ethylene-vinyl acetate copolymer, microporous polyurethane, chemically cross-linked polyethylene foamed cotton, expandable polypropylene, polyamide, rubber, or silicone.

In some embodiments of this application, a width of the first elastic layer and/or the insulation layer is less than or equal to 1,000 mm, and a thickness thereof is less than or equal to 100 mm.

In some embodiments of this application, the battery cell is a stacked battery cell. The stacked battery cell includes a first end, a second end disposed opposite to the first end, and a lateral surface connected between the first end and the second end. A first tab is disposed on the battery cell. The first tab protrudes from the lateral surface. The composite plate is located between the housing and the first end, or between the housing and the second end, or between the housing and the lateral surface.

In some embodiments of this application, the composite plate further includes a second elastic layer. The insulation layer is located between the first elastic layer and the second elastic layer.

In some embodiments of this application, the composite plate further includes an adhesive layer. The adhesive layer is located between the second elastic layer and the insulation layer.

In some embodiments of this application, the battery cell is a wound battery cell.

In some embodiments of this application, the housing includes a first housing body and a second housing body welded and connected to the first housing body. An electrode pole is disposed on the second housing body. The electrode pole is electrically isolated from the second housing body. A first tab and a second tab are disposed on the battery cell, the first tab is electrically connected to the electrode pole, and the second tab is electrically connected to the first housing body or the second housing body.

In this application, a composite plate is disposed in the gap between the housing and the battery cell. The composite plate prevents the battery cell from shaking in the housing, avoids failure of the battery cell caused by pulling of the tabs in a process of shaking the battery cell, and also avoids short circuits caused by displacement of the electrode plate in the process of pulling the tabs, and improves safety performance and service life of the battery. In addition, the first elastic layer is elastic. Therefore, the first elastic layer can be compressed when the battery cell expands during cycles, thereby releasing a space, compensating for volume loss of the battery cell caused by the use of the composite plate, and increasing the energy density of the battery.

### BRIEF DESCRIPTION OF DRAWINGS

FIG. 1 is a schematic structural diagram of a battery according to an embodiment of this application;
FIG. 2 is a top view of the battery shown in FIG. 1;
FIG. 3 is a top view of the battery shown in FIG. 1 after a second housing is removed;
FIG. 4 is a cross-sectional view of the battery shown in FIG. 2 along an IV-IV direction according to an embodiment of this application;
FIG. 5 is a cross-sectional view of a composite plate of the battery shown in FIG. 4 according to an embodiment of this application;
FIG. 6 is a cross-sectional view of a composite plate of the battery shown in FIG. 4 according to another embodiment of this application;
FIG. 7 is a cross-sectional view of a composite plate of the battery shown in FIG. 4 according to still another embodiment of this application; and
FIG. 8 is a cross-sectional view of the battery shown in FIG. 2 along an IV-IV direction according to another embodiment of this application.

Reference numerals:

| | |
|---|---|
| Housing | 10 |
| First housing body | 11 |
| Second housing body | 12 |
| Electrode pole | 13 |
| Injection plug | 14 |
| Battery cell | 20 |
| First end | 20a |
| Second end | 20b |
| Lateral surface | 20c |
| First electrode plate | 21 |
| Second electrode plate | 22 |
| Composite plate | 30 |
| First elastic layer | 31 |
| Insulation layer | 32 |
| Second elastic layer | 33 |
| Adhesive layer | 34 |
| Battery | 100, 200 |
| Gap | 101 |
| First tab | 210 |
| First connector adapter | 211 |
| Second tab | 220 |
| Second connector adapter | 221 |
| Via hole | 300 |

This application is further described below with reference to the following specific embodiments and the foregoing drawings.

### DETAILED DESCRIPTION OF EMBODIMENTS

The following clearly and fully describes the technical solutions in the embodiments of this application with reference to the drawings hereof. Apparently, the described embodiments are merely a part of but not all of the embodiments of this application. All other embodiments derived by a person of ordinary skill in the art based on the embodiments of this application without making any creative efforts shall fall within the protection scope of this application.

Unless otherwise defined, all technical and scientific terms used herein have the same meanings as usually understood by a person skilled in the technical field of this application. The terms used in the specification of this application herein are merely intended for describing specific embodiments but are not intended to limit this application.

The following describes some embodiments of this application in detail with reference to drawings. To the extent that no conflict occurs, the following embodiments and the features in the embodiments may be combined with each other.

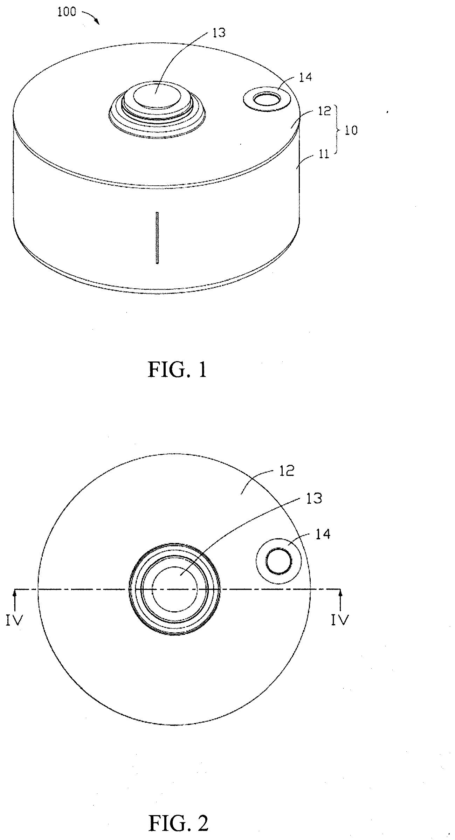

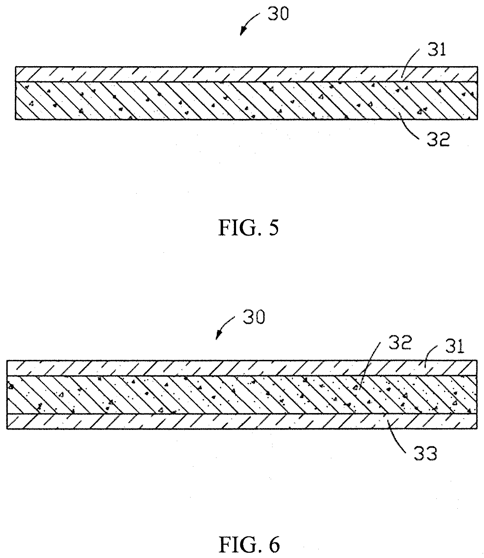

Referring to FIG. 1 to FIG. 4, an embodiment of this application provides a battery 100, including a housing 10 and a battery cell 20 accommodated in the housing 10. A gap 101 exists between the housing 10 and the battery cell 20. The battery 100 further includes a composite plate 30. The composite plate 30 is located in the gap 101. Referring to FIG. 5, the composite plate 30 includes a first elastic layer 31 and an insulation layer 32 located on a surface of the first elastic layer 31.

In this application, the composite plate 30 is disposed in the gap 101 between the housing 10 and the battery cell 20. The composite plate 30 prevents the battery cell 20 from shaking in the housing 10, avoids failure of the battery cell 20 caused by pulling of the tabs in a process of shaking the battery cell 20, and also avoids short circuits caused by displacement of the electrode plate in the process of pulling the tabs, and improves safety performance and service life of the battery 100. In addition, the first elastic layer 31 is elastic. Therefore, the first elastic layer 31 can be compressed when the battery cell 20 expands during cycles, thereby releasing a space, compensating for volume loss of the battery cell 20 caused by the use of the composite plate 30, and increasing the energy density of the battery 100.

In an embodiment, the insulation layer 32 is located between the first elastic layer 31 and the battery cell 20. The insulation layer 20 is configured to electrically isolate the battery cell 20.

In another embodiment, the first elastic layer 31 includes an insulation material. In this case, the first elastic layer 31 may also be located between the insulation layer 32 and the battery cell 20. Specifically, the insulation material of the first elastic layer 31 may include at least one of expandable polyethylene (EPE), polyurethane (PU), ethylene-vinyl acetate copolymer (EVA), microporous polyurethane, chemically cross-linked polyethylene foamed cotton (IXPE), expandable polypropylene (EPP), polyamide (PA), rubber, or silicone.

A material of the insulation layer 32 may include at least one of polypropylene (PP), polyethylene terephthalate (PET), polystyrene (PS), polyethylene (PE), polyvinyl chloride (PVC), polyimide (PI), acrylonitrile-butadiene-styrene copolymer (ABS), polycarbonate (PC), polyamide (PA), or polytetrafluoroethylene (PTFE).

The first elastic layer 31 and the insulation layer 32 may be combined into one by means of gluing, heat sealing, welding, and the like.

In an embodiment, a width of the first elastic layer 31 and/or the insulation layer 32 is less than or equal to 1,000 mm, and a thickness thereof is less than or equal to 100 mm. The first elastic layer and the second insulation layer extend along two parallel planes respectively. The width is a width of the first elastic layer 31 or the insulation layer 32 in any direction on a plane in which the first elastic layer 31 or the insulation layer 32 is located. The thickness is a thickness of the first elastic layer 31 or the insulation layer 32 in a direction perpendicular to the plane in which the first elastic layer 31 or the insulation layer 32 is located.

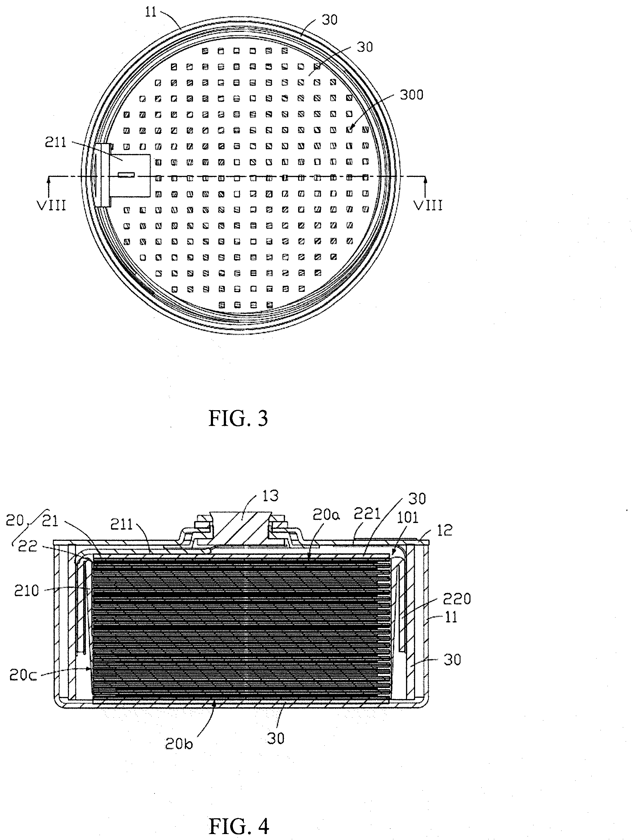

Referring to FIG. 3 and FIG. 5, in an embodiment, the composite plate 30 is provided with a via hole 300. The via hole 300 runs through the first elastic layer 31 and the insulation layer 32. Therefore, when an electrolytic solution is injected into the housing 10, the electrolytic solution can pass through the via hole 300 and fully infiltrate the battery cell 20. This increases a capability of the electrolytic solution to permeate the electrode plate of the battery cell 20, and ensures a good contact interface between the electrode plate and the electrolytic solution.

The via hole 300 may be formed by stamping or mechanical cutting or by other means. The via hole 300 may be circular, square, elliptical, triangular, polygonal, or another shape.

As shown in FIG. 4, in an embodiment, the battery cell 20 is a stacked battery cell. The stacked battery cell includes a first end 20a, a second end 20b disposed opposite to the first end 20a, and a lateral surface 20c connected between the first end 20a and the second end 20b. A first tab 210 is disposed on the battery cell 20. The first tab 210 protrudes from the lateral surface 20c. The composite plate 30 is located between the housing 10 and the first end 20a or between the housing 10 and the second end 20b. Therefore, the composite plate 30 can prevent the battery cell 20 from shaking in the gap 101 between the end and the housing 10.

As shown in FIG. 4, one composite plate 30 is located between the first end 20a and the housing 10, and another composite plate 30 is located between the second end 20b and the housing 10. In this case, by stamping or mechanical cutting, the composite plate 30 may be processed into a desired shape, such as a circle, a square, an ellipse, a triangle, or a polygon.

Further, the composite plate 30 may also be located between the housing 10 and the lateral surface 20c. Therefore, the composite plate 30 can prevent the battery cell 20 from shaking in the gap 101 between the lateral surface 20c and the housing 10. In this case, the composite plate 30 may be in a ring shape, so that the composite plate 30 can surround the entire lateral surface 20c of the battery cell 20 to achieve a good shockproof effect.

When the composite plate 30 is located between the lateral surface 20c and the housing 10 and also located between the first end 20a and the housing 10 and between the second end 20b and the housing 10, the composite plate 30 can surround all surfaces of the battery cell 20 to further improve the shockproof effect of the composite plate 30.

As shown in FIG. 6, in another embodiment, the composite plate 30 further includes a second elastic layer 33. The insulation layer 32 is located between the first elastic layer 31 and the second elastic layer 33. An overall thickness of the composite plate 30 increases due to the added second elastic layer 33 and loses a part of volume of the battery cell 20. However, the second elastic layer 33 can be configured to be compressed when the battery cell 20 expands during cycles, thereby releasing a space, and compensating for volume loss of the battery cell 20 caused by the use of the composite plate 30.

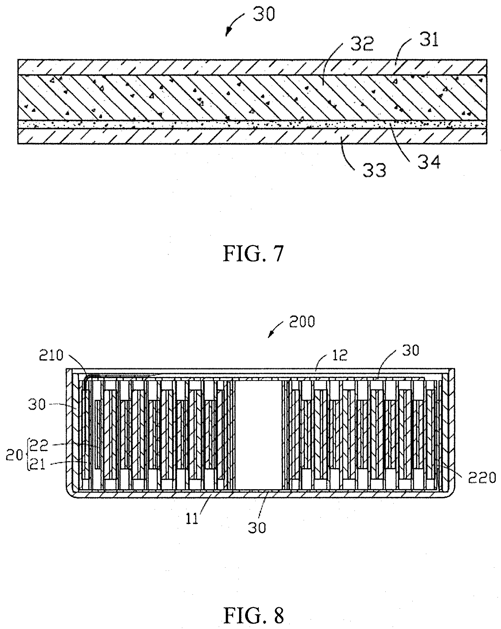

As shown in FIG. 7, in another embodiment, the composite plate 30 further includes an adhesive layer 34. The adhesive layer 34 is located between the second elastic layer 33 and the insulation layer 32. The adhesive layer 34 is configured to improve a connection strength between the second elastic layer 33 and the insulation layer 32. In other embodiments, the adhesive layer may be further disposed between the first elastic layer 31 and the insulation layer 32.

As shown in FIG. 1 and FIG. 4, in an embodiment, the housing 10 includes a first housing body 11 and a second housing body 12 welded and connected to the first housing body 11. An electrode pole 13 is disposed on the second housing body 12. The electrode pole 13 is electrically isolated from the second housing body 12. The first tab 210 is electrically connected to the electrode pole 13.

In this case, the first end 20a is disposed toward the electrode pole 13. Therefore, when the composite plate 30 is located between the first end 20a and the housing 10, the composite plate 30 can also be configured to prevent the battery cell 20 from directly contacting the electrode pole 13, prevent the electrode pole on the housing from penetrating the electrode plate of the battery cell 20 during a crush test, and thereby avoid short circuits.

As shown in FIG. 4, the battery cell 20 further includes a second tab 220. The second tab 220 protrudes from the lateral surface 20c. The second tab 220 is electrically connected to the first housing body 11 or the second housing body 12.

By electrically connecting the first tab 210 to the electrode pole 13, the electrode pole 13 can exhibit an electrical polarity identical to that of the first electrode plate 21. By electrically connecting the second tab 220 to the first housing body 11 or the second housing body 12, the entire housing 10 can exhibit an electrical polarity identical to that of the second electrode plate 22. The insulation layer 32 in the composite plate 30 is electrically insulative. Therefore, the composite plate 30 can also prevent the housing 10 from directly contacting an electrode plate of an opposite polarity in the battery cell 20, thereby avoiding short circuits.

Specifically, as shown in FIG. 4, the battery cell 20 includes a first electrode plate 21, a second electrode plate 22, and a separator (not shown in the drawing) located between the first electrode plate 21 and the second electrode plate 22. The first electrode plate 21, the separator, and the second electrode plate 22 are stacked to form the battery cell 20. The first electrode plate 21 includes a first current collector and a first active material layer disposed on a surface of the first current collector. The first tab 210 may be electrically connected to the first active material layer by welding, and electrically connected to the electrode pole 13 through a first connector adapter 211. The second tab 220 includes a second current collector and a second active material layer disposed on a surface of the second current collector. The second tab 220 may be electrically connected to the second current collector by welding, and electrically connected to the first housing body 11 or the second housing body 12 through a second connector adapter 221.

Therefore, when the first electrode plate 21 is a negative electrode plate, the electrode pole 13 can exhibit a negative polarity. When the second electrode plate 22 is a positive electrode plate, the entire housing 10 can exhibit a positive polarity.

As shown in FIG. 4, the first housing body 11 contains an accommodation space that is used to accommodate the battery cell 20. The second housing body 12 is connected to the first housing body 11 to close the accommodation space. That is, the second housing body 12 is a top cover of the housing 10. A material of the first housing body 11 and the second housing body 12 may be metal. For example, the material of the first housing body 11 and the second housing body 12 may be a steel alloy, an aluminum alloy, an iron alloy, a copper alloy, a nickel alloy, or the like.

As shown in FIG. 1 to FIG. 4, the battery 100 in this embodiment is a button battery, and the material of both the first housing body 11 and the second housing body 12 is stainless steel. When being prepared, the first housing body 11 and the second housing body 12 may form a desired shape by using techniques such as laser cutting and machine processing. The first housing body 11 may also form a stamped pit (that is, the accommodation space) by stamping.

As shown in FIG. 1, in this embodiment, the second housing body 12 is provided with an injection hole (not shown in the drawing). An electrolytic solution can be injected through the injection hole. An injection plug 14 is disposed in the injection hole. The injection plug 14 is configured to seal the injection hole to prevent the injected electrolytic solution from leaking and prevent external impurities from entering the battery. Alternatively, the injection hole may be located on the first housing body 11.

Referring to FIG. 8, another embodiment of this application further provides a battery 200. A difference from the battery 100 described above is that a battery cell 20 of the battery 200 is a wound battery cell. To be specific, the first electrode plate 21, the separator, and the second electrode plate 22 are wound to form the battery cell 20.

In this case, the housing 10 may be provided with no electrode pole. The first housing body 11 and the second housing body 12 are fixed by a sealing ring (not shown in the drawing). To be specific, the first housing body 11 and the second housing body 12 are electrically isolated by the sealing ring. The first tab 210 is electrically connected to the second housing body 12, and the second tab 220 is electrically connected to the first housing body 11.

## Claims

1. A battery (100), comprising: a housing (10) and a battery cell (20) accommodated in the housing (10), with a gap (101) existing between the housing (10) and the battery cell (20), the battery (100) further comprising:
a composite plate (30), wherein the composite plate (30) is located in the gap (101), and
the composite plate (30) comprises a first elastic layer (31) and an insulation layer (32) located on a surface of the first elastic layer (31),
**characterized in that** the composite plate (30) is provided with a via hole (300), and the via hole (300) runs through the first elastic layer (31) and the insulation layer (32).

2. The battery (100) according to claim 1, **characterized in that** the insulation layer (32) is located between the first elastic layer (31) and the battery cell (20).

3. The battery (100) according to claim 1 or 2, **characterized in that** the first elastic layer (31) comprises an insulation material, and the first elastic layer (31) is located between the insulation layer (32) and the battery cell (20).

4. The battery (100) according to claim 3, **characterized in that** the insulation material of the first elastic layer (31) comprises at least one of expandable polyethylene, polyurethane, ethylene-vinyl acetate copolymer, microporous polyurethane, chemically cross-linked polyethylene foamed cotton, expandable polypropylene, polyamide, rubber, or silicone.

5. The battery (100) according to any one of claims 1 to 4, **characterized in that** a width of the first elastic layer (31) and/or the insulation layer (32) is less than or equal to 1,000 mm, and a thickness thereof is less than or equal to 100 mm.

6. The battery (100) according to any one of claims 1 to 5, **characterized in that** the battery cell (20) is a stacked battery cell; the stacked battery cell comprises a first end (20a), a second end (20b) disposed opposite to the first end (20a), and a lateral surface (20c) connected between the first end (20a) and the second end (20b); a first tab (210) is disposed on the battery cell (20), and the first tab (210) protrudes from the lateral surface (20c); and the composite plate (30) is located between the housing (10) and the first end (20a), or between the housing (10) and the second end (20b), or between the housing (10) and the lateral surface (20c).

7. The battery (100) according to any one of claims 1 to 6, **characterized in that** the composite plate (30) further comprises a second elastic layer (33), and the insulation layer (32) is located between the first elastic layer (31) and the second elastic layer (33).

8. The battery (100) according to claim 7, **characterized in that** the composite plate (30) further comprises an adhesive layer (34), and the adhesive layer (34) is located between the second elastic layer (33) and the insulation layer (32).

9. The battery (100) according to any one of claims 1 to 8, **characterized in that** the housing (10) comprises a first housing body (11) and a second housing body (12) welded and connected to the first housing body (11), and an electrode pole (13) is disposed on the second housing body (12), and the electrode pole (13) is electrically isolated from the second housing body (12); and
a first tab (210) and a second tab (220) are disposed on the battery cell (20), the first tab (210) is electrically connected to the electrode pole (13), and the second tab (220) is electrically connected to the first housing body (11) or the second housing body (12).

## Patentansprüche

1. Batterie (100), umfassend: ein Gehäuse (10) und eine in dem Gehäuse (10) untergebrachte Batteriezelle (20), wobei zwischen dem Gehäuse (10) und der Batteriezelle (20) ein Spalt (101) besteht, wobei die Batterie (100) ferner Folgendes umfasst:
eine Verbundplatte (30), wobei die Verbundplatte (30) in dem Spalt (101) befindlich ist und
die Verbundplatte (30) eine erste elastische Schicht (31) und eine Isolierschicht (32) umfasst, die auf einer Oberfläche der ersten elastischen Schicht (31) befindlich ist,
**dadurch gekennzeichnet, dass** die Verbundplatte (30) mit einem Durchgangsloch (300) versehen ist und das Durchgangsloch (300) durch die erste elastische Schicht (31) und die Isolierschicht (32) verläuft.

2. Batterie (100) nach Anspruch 1, **dadurch gekennzeichnet, dass** die Isolierschicht (32) zwischen der ersten elastischen Schicht (31) und der Batteriezelle (20) befindlich ist.

3. Batterie (100) nach Anspruch 1 oder 2, **dadurch gekennzeichnet, dass** die erste elastische Schicht (31) ein Isoliermaterial umfasst und die erste elastische Schicht (31) zwischen der Isolierschicht (32) und der Batteriezelle (20) befindlich ist.

4. Batterie (100) nach Anspruch 3, **dadurch gekennzeichnet, dass** das Isoliermaterial der ersten elastischen Schicht (31) mindestens eines der folgenden Materialien umfasst: expandierbares Polyethylen, Polyurethan, Ethylen-Vinylacetat-Copolymer, mikroporöses Polyurethan, chemisch vernetzter Polyethylen-Schaumstoff, expandierbares Polypropylen, Polyamid, Kautschuk oder Silikon.

5. Batterie (100) nach einem der Ansprüche 1 bis 4, **dadurch gekennzeichnet, dass** eine Breite der ersten elastischen Schicht (31) und/oder der Isolierschicht (32) kleiner oder gleich 1.000 mm ist und eine Dicke davon kleiner oder gleich 100 mm ist.

6. Batterie (100) nach einem der Ansprüche 1 bis 5, **dadurch gekennzeichnet, dass** die Batteriezelle (20) eine gestapelte Batteriezelle ist, die gestapelte Batteriezelle ein erstes Ende (20a), ein zweites Ende (20b), das gegenüber dem ersten Ende (20a) angeordnet ist, und eine seitliche Oberfläche (20c), die zwischen dem ersten Ende (20a) und dem zweiten Ende (20b) verbunden ist, umfasst, wobei eine erste Lasche (210) auf der Batteriezelle (20) angeordnet ist und die erste Lasche (210) von der seitlichen Oberfläche (20c) vorsteht und die Verbundplatte (30) zwischen dem Gehäuse (10) und dem ersten Ende (20a) oder zwischen dem Gehäuse (10) und dem zweiten Ende (20b) oder zwischen dem Gehäuse (10) und der seitlichen Oberfläche (20c) befindlich ist.

7. Batterie (100) nach einem der Ansprüche 1 bis 6, **dadurch gekennzeichnet, dass** die Verbundplatte (30) ferner eine zweite elastische Schicht (33) umfasst und die Isolierschicht (32) zwischen der ersten elastischen Schicht (31) und der zweiten elastischen Schicht (33) befindlich ist.

8. Batterie (100) nach Anspruch 7, **dadurch gekennzeichnet, dass** die Verbundplatte (30) ferner eine Klebeschicht (34) umfasst und die Klebeschicht (34) zwischen der zweiten elastischen Schicht (33) und der Isolierschicht (32) befindlich ist.

9. Batterie (100) nach einem der Ansprüche 1 bis 8, **dadurch gekennzeichnet, dass** das Gehäuse (10) einen ersten Gehäusekörper (11) und einen zweiten Gehäusekörper (12) umfasst, der mit dem ersten Gehäusekörper (11) verschweißt und verbunden ist, und dass ein Elektrodenpol (13) auf dem zweiten Gehäusekörper (12) angeordnet ist und der Elektrodenpol (13) von dem zweiten Gehäusekörper (12) elektrisch isoliert ist und
eine erste Lasche (210) und eine zweite Lasche (220) auf der Batteriezelle (20) angeordnet sind, die erste Lasche (210) elektrisch mit dem Elektrodenpol (13) verbunden ist und die zweite Lasche (220) elektrisch mit dem ersten Gehäusekörper (11) oder dem zweiten Gehäusekörper (12) verbunden ist.

## Revendications

1. Batterie (100) comprenant : un boîtier (10) et un élément de batterie (20) logé dans le boîtier (10), avec un espace (101) existant entre le boîtier (10) et l'élément de batterie (20), la batterie (100) comprenant en outre :
une plaque composite (30), dans laquelle la plaque composite (30) est située dans l'espace (101), et
la plaque composite (30) comprend une première couche élastique (31) et une couche isolante (32) située sur une surface de la première couche élastique (31),
**caractérisée en ce que** la plaque composite (30) est pourvue d'un trou d'interconnexion (300), et que le trou d'interconnexion (300) traverse la première couche élastique (31) et la couche isolante (32).

2. Batterie (100) selon la revendication 1, **caractérisée en ce que** la couche isolante (32) est située entre la première couche élastique (31) et l'élément de batterie (20).

3. Batterie (100) selon la revendication 1 ou 2, **caractérisée en ce que** la première couche élastique (31) comprend un matériau isolant, et que la première couche élastique (31) est située entre la couche isolante (32) et l'élément de batterie (20).

4. Batterie (100) selon la revendication 3, **caractérisée en ce que** le matériau isolant de la première couche élastique (31) comprend au moins un parmi : polyéthylène expansible, polyuréthane, copolymère d'éthylène-acétate de vinyle, polyuréthane microporeux, coton mousse de polyéthylène chimiquement réticulé, polypropylène expansible, polyamide, caoutchouc ou silicone.

5. Batterie (100) selon l'une quelconque des revendications 1 à 4, **caractérisée en ce qu'**une largeur de la première couche élastique (31) et/ou de la couche isolante (32) est inférieure ou égale à 1000 mm, et qu'une épaisseur de celle-ci est inférieure ou égale à 100 mm.

6. Batterie (100) selon l'une quelconque des revendications 1 à 5, **caractérisée en ce que** l'élément de batterie (20) est un élément de batterie empilé ; l'élément de batterie empilé comprend une première extrémité (20a), une seconde extrémité (20b) disposée à l'opposé de la première extrémité (20a), et une surface latérale (20c) reliée entre la première extrémité (20a) et la seconde extrémité (20b) ; une première languette (210) est disposée sur l'élément de batterie (20), et la première languette (210) dépasse de la surface latérale (20c) ; et la plaque composite (30) est située entre le boîtier (10) et la première extrémité (20a), ou entre le boîtier (10) et la seconde extrémité (20b), ou entre le boîtier (10) et la surface latérale (20c).

7. Batterie (100) selon l'une quelconque des revendications 1 à 6, **caractérisée en ce que** la plaque composite (30) comprend en outre une seconde couche élastique (33), et la couche isolante (32) est située entre la première couche élastique (31) et la seconde couche élastique (33).

8. Batterie (100) selon la revendication 7, **caractérisée en ce que** la plaque composite (30) comprend en outre une couche adhésive (34), et la couche adhésive (34) est située entre la seconde couche élastique (33) et la couche isolante (32).

9. Batterie (100) selon l'une quelconque des revendications 1 à 8, **caractérisée en ce que** le boîtier (10) comprend un premier corps de boîtier (11) et un second corps de boîtier (12) soudé et relié au premier corps de boîtier (11), et qu'un pôle d'électrode (13) est disposé sur le second corps de boîtier (12), et que le pôle d'électrode (13) est isolé électriquement du second corps de boîtier (12) ; et
une première languette (210) et une seconde languette (220) sont disposées sur l'élément de batterie (20), la première languette (210) est connectée électriquement au pôle d'électrode (13), et la seconde languette (220) est connectée électriquement au premier corps de boîtier (11) ou au second corps de boîtier (12).
